# EUROPEAN PATENT APPLICATION

(11) **EP 3 715 791 A1**
(43) Date of publication of application: **30.09.2020**
(21) Application number: 20162561.3
(22) Date of filing: 12.03.2020
(51) Int. Cl.: G01C 21/34, B60W 30/095

(54) **VEHICLE DRIVING SUPPORT SYSTEM, METHOD, COMPUTER-PROGRAM PRODUCT, AND VEHICLE**

(30) Priority: 29.03.2019 JP 2019065421
(71) Applicant: Mazda Motor Corporation, Hiroshima 730-8670 (JP)
(72) Inventor: TAKAHASHI, Hideki, Fuchu-cho, Aki-gun,, Hiroshima 730-8670 (JP)
(74) Representative: Müller-Boré & Partner Patentanwälte PartG mbB

(57) **Abstract**

Provided is a vehicle driving support system that achieves a balance between accurately evaluating the path cost of a candidate path and reducing the load of calculating the path cost. A vehicle driving support system 100 includes an ECU 10 that is a controller. The ECU 10 sets a target path on a travel road based on travel road information, and controls a vehicle 1 so as to travel along the target path. The ECU 10 sets, in the vicinity of an obstacle, a warning area WA with an outer shape according to the obstacle. The ECU 10 sets sampling points SP at intervals of d₁ along a part of the candidate path RC that is included in the warning area WA, and sets the sampling points SP at intervals of d₂, longer than the interval d₁, along the other part of the candidate path RC.

## Description

### BACKGROUND OF THE INVENTION

### Field of the Invention

The present invention relates to a vehicle driving support system installable or installed in a vehicle, to a respective vehicle, method and computer-program product.

### Description of the Related Art

As algorithms used to set candidate paths of a vehicle (i.e., candidates that can be a target path for the vehicle to actually travel along), the method of potentials, spline interpolation functions, A-star (A*), RRT, and the state lattice method are known. Vehicle driving support systems using such algorithms have been proposed.

These algorithms allow a plurality of candidate paths to be set on a travel road of a vehicle. A path evaluation parameter of each candidate path is calculated particularly from the viewpoint of obstacle circumvention etc., and one candidate path determined as appropriate based on the calculation result is selected as a target path. For example, International Publication No. WO 2013/051081 discloses a vehicle driving support system that sets a plurality of candidate paths on a grid map and selects one candidate path based on a movement evaluation parameter.

The system described in International Publication No. WO 2013/051081 calculates the movement evaluation parameter (also referred to as the movement cost) at all those cells of a plurality of cells on the grid map that the candidate path passes through. While a technique of thus calculating a path evaluation parameter (also referred to as a path cost) at a large number of positions on a candidate path is rational from the viewpoint of enhancing the evaluation accuracy of the path evaluation parameter of the candidate path, a heavy load of calculation is imposed on the system.

Especially when a technique like the state lattice method that can set a large number of candidate paths is used, a huge load of calculating the path evaluation parameter may be imposed on the system. Therefore, a balance has been sought between reducing the load of calculation and accurately evaluating a path evaluation parameter.

The present invention has been made to solve this problem, and an object thereof is to provide a vehicle driving support system that achieves a balance between accurately evaluating the path evaluation parameter of a candidate path and reducing the load of calculating the path evaluation parameter.

### SUMMARY OF THE INVENTION

This object is solved according to the invention by the features of the independent claims. Particular embodiments of the invention are subject of the dependent claims.

To solve the above problem, the present invention provides a vehicle driving support system installed or to be installed in a vehicle. This system includes: a travel road information acquiring device that acquires or can acquire travel road information relating to a travel road; an obstacle information acquiring device that acquires or can acquire obstacle information relating to an obstacle on the travel road; and a controller that is configured to set a target path on the travel road based on the travel road information and to control the vehicle so as to travel along the target path. The controller is configured to: set a plurality of candidate paths on the travel road based on the travel road information; set a plurality of sampling points at specified (predetermined or predeterminable) intervals along each of the plurality of candidate paths; calculate a path evaluation parameter (particularly a path cost) at each of the plurality of sampling points; and select one of the plurality of candidate paths as the target path based on the path evaluation parameter (path cost). The controller is further configured to: set, in the vicinity of or corresponding to the obstacle, at least one warning area with an outer shape according or corresponding to the obstacle; and set the sampling points at first intervals along a part of the candidate path that is included in the warning area, and set the sampling points at second intervals, longer than the first intervals, along the other part of the candidate path.

In this configuration, the controller particularly sets, in the vicinity of an obstacle, a warning area with an outer shape according or corresponding to the obstacle.

Further, the controller particularly sets the sampling points at the first intervals along a part of the candidate path that is included in the warning area. Since the first interval is shorter than the second interval, a plurality of sampling points are, thus, set at a relatively high density in the vicinity of the obstacle. As a result, the path evaluation parameter (path cost) in a range according to the obstacle can be evaluated with high accuracy.

On the other hand, for the other part of the candidate path (i.e., the part not included in the warning area), the controller particularly sets the sampling points at the second intervals along this other part. Since the second interval particularly is longer than the first interval, a plurality of sampling points are thus set at a relatively low density in the other part.

As a result, the load of calculating the path evaluation parameter (path cost) in the other part can be reduced. While the relatively low density of the sampling points reduces the evaluation accuracy of the path evaluation parameter (path cost) in the other part, this evaluation accuracy has a relatively minor impact on traveling of the vehicle through the warning area.

Thus, the above configuration makes it possible to evaluate a path evaluation parameter (path cost) with accuracy sufficient for practical use while reducing the load of calculation. As a result, a balance is achieved between accurately evaluating the path evaluation parameter (path cost) of a candidate path and reducing the load of calculating the path evaluation parameter (path cost).

According toa particular embodiment, the controller may be configured to make the outer shape of the warning area larger as a distance from the vehicle to the obstacle is longer.

Generally, the accuracy of determining an obstacle decreases as the distance from a vehicle equipped with the vehicle driving support system to the obstacle increases.

In the above configuration, the outer shape of the warning area is made larger as a distance from the vehicle to the obstacle is longer, which allows setting of a warning area with an outer shape according to the accuracy of determining an obstacle. As a result, it is possible to evaluate a path evaluation parameter (path cost) with accuracy sufficient for practical use while reducing the load of calculation.

Accordingly, it has been recognized that it is not necessary to make the outer shape of the warning area continuously larger as the distance from the vehicle to the obstacle increases. For example, a form of the warning area in which the outer shape of the warning area becomes larger stepwise as the distance from the vehicle to the obstacle increases is also included in the scope of the present invention.

Particularly, the controller may be configured to make the outer shape of the warning area larger when the obstacle is a vehicle than when the obstacle is a pedestrian.

This configuration makes it possible to evaluate a path evaluation parameter (path cost) with high accuracy in a larger range when the obstacle is a vehicle than when the obstacle is a pedestrian. Thus, a path evaluation parameter (path cost) relative to a vehicle that is an obstacle with a relatively high moving speed can be evaluated with higher accuracy. As a result, it is possible to evaluate a path evaluation parameter (path cost) with accuracy sufficient for practical use while reducing the load of calculation.

Further particularly, the controller may be configured to set the first interval shorter when the obstacle is a pedestrian than when the obstacle is a vehicle.

This configuration makes it possible to set a plurality of sampling points in the warning area at a higher density when the obstacle is a pedestrian than when the obstacle is a vehicle.

Thus, a path evaluation parameter (path cost) relative to a pedestrian that is an obstacle with a relatively small outer shape can be evaluated with higher accuracy. As a result, it is possible to evaluate a path evaluation parameter (path cost) with accuracy sufficient for practical use while reducing the load of calculation.

Further particularly, the controller may be configured to, when there are a plurality of obstacles on the travel road, set the warning area in the vicinity of an obstacle that is closest to the vehicle and set no warning area in the vicinity of the other obstacles.

In this configuration, a plurality of sampling points are set at a relatively high density in the vicinity of an obstacle that is closest to the vehicle. Thus, a path evaluation parameter (path cost) relative to an obstacle that requires most attention for safety can be evaluated with higher accuracy. As a result, it is possible to evaluate a path evaluation parameter (path cost) with accuracy sufficient for practical use while reducing the load of calculation.

According to another aspect, there is provided a vehicle comprising a vehicle driving support system according to the above aspect or a particular embodiment thereof.

According to yet another aspect, there is provided a computer-implemented vehicle driving support method comprising:
acquiring travel road information relating to a travel road;
acquiring obstacle information relating to an obstacle on the travel road; and
setting a target path on the travel road based on the travel road information and to control the vehicle so as to travel substantially along the target path, wherein
wherein the vehicle driving support method further comprises:
   setting a plurality of candidate paths on the travel road based on the travel road information;
   setting a plurality of sampling points at specified intervals along each of the plurality of candidate paths;
   calculating a path evaluation parameter at each of the plurality of sampling points; and
   selecting one of the plurality of candidate paths as the target path based on the path evaluation parameter,
   wherein, in the vicinity of or corresponding to the obstacle, at least one warning area is set with an outer shape according or corresponding to the obstacle; and
   wherein the sampling points are set at first intervals along a part of the candidate path that is included in the warning area, and the sampling points are set at second intervals, longer than the first intervals along the other part of the candidate path.

According to a particular embodiment, the outer shape of the warning area is made larger as a distance from the vehicle to the obstacle is longer.

Particularly, the outer shape of the warning area is made larger when the obstacle is a vehicle than when the obstacle is a pedestrian.

Further particularly, the first interval is set shorter when the obstacle is a pedestrian than when the obstacle is a vehicle.

Further particularly, when there are a plurality of obstacles on the travel road, the warning area is set in the vicinity of an obstacle that is closest to the vehicle while no warning area is set in the vicinity of the other obstacles.

According to another aspect, there is provided a computer program product comprising computer readable instructions which, when loaded and executed on a suitably system, perform the steps of a vehicle driving support method according to the above aspect or a particular embodiment thereof.

According to the above, it is possible to achieve a balance between accurately evaluating the path evaluation parameter (path cost) of a candidate path and reducing the load of calculating the path evaluation parameter (path cost).

### BRIEF DESCRIPTION OF THE DRAWINGS

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a configuration diagram of a vehicle driving support system according to an embodiment;
FIG. 2 is a view illustrating candidate paths and sampling points;
FIG. 3 is a view illustrating candidate paths and sampling points;
FIG. 4 is a flowchart showing calculations executed by the ECU of FIG. 1;
FIG. 5 is a view illustrating candidate paths and sampling points according to a first modification; and
FIG. 6 is a view illustrating candidate paths and sampling points according to a second modification.

### DETAILED DESCRIPTION OF THE PREFERRED EMBODIMENT

### Embodiment

An embodiment will be described below with reference to the accompanying drawings. To make the description easy to understand, the same components in the drawings are denoted by the same reference signs and repetition of the same description will be avoided.

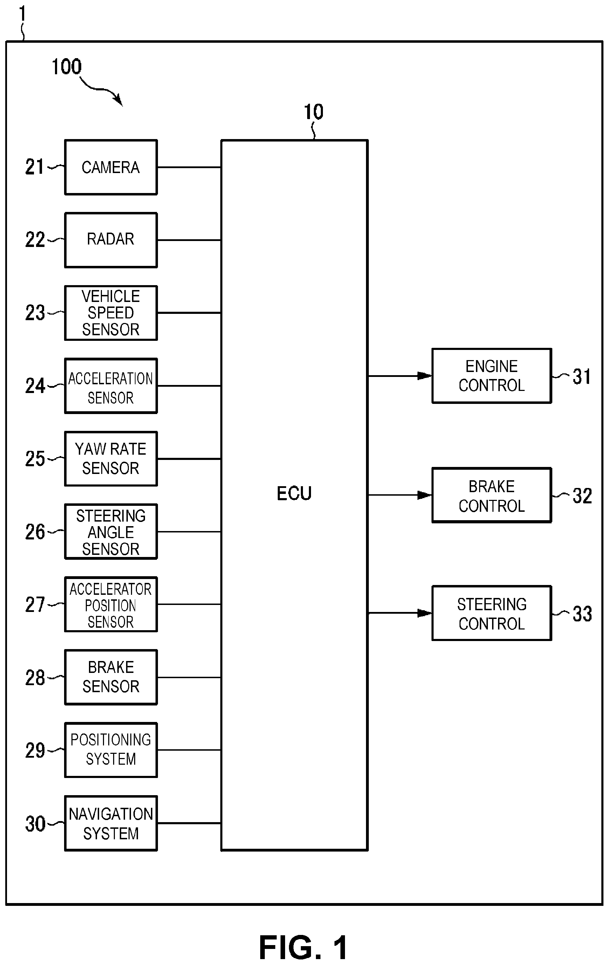

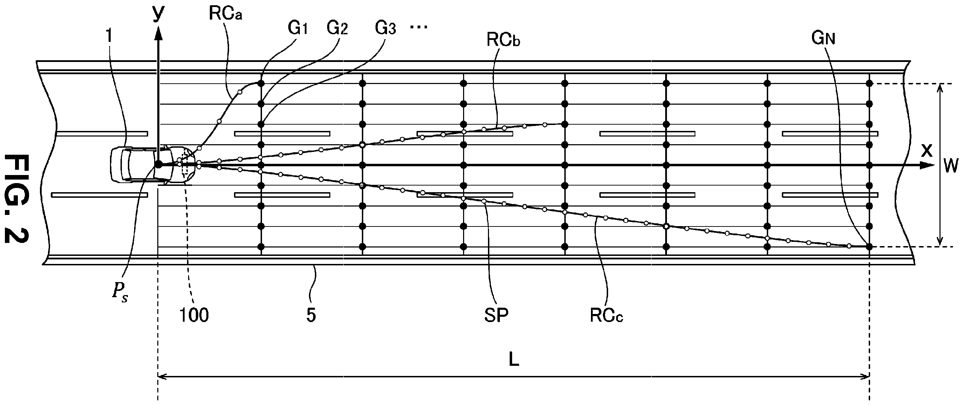

First, an overview of a vehicle driving support system 100 according to an embodiment of the present invention will be described with reference to FIG. 1 and FIG. 2. FIG. 1 is a configuration diagram of the vehicle driving support system 100. FIG. 2 is a view illustrating candidate paths RC and sampling points SP.

The vehicle driving support system 100 is installed or installable in a vehicle 1 and provides driving support control under which the vehicle 1 travels along a target path. As shown in FIG. 1, the vehicle driving support system 100 includes an electronic control unit (ECU) 10, one or more, particularly a plurality of sensors, and/or one or more, particularly a plurality of control systems. The plurality of sensors include a camera 21, a radar 22, a vehicle speed sensor 23 that detects a behavior of the vehicle 1 and a driving operation by an occupant, an acceleration sensor 24, a yaw rate sensor 25, a steering angle sensor 26, an accelerator position sensor 27, and/or a brake sensor 28. The plurality of sensors further or alternatively include a positioning system 29 that detects the position of the vehicle 1, and/or a navigation system 30. The plurality of control systems include an engine control system 31, a brake control system 32, and/or a steering control system 33.

As other sensors, a peripheral sonar that measures the distance and position of a structure around the vehicle 1 relative to the vehicle 1, a corner radar that measures an approach of a structure around the vehicle 1 at four corners of the vehicle 1, and an inner camera that takes images of the inside of the cabin of the vehicle 1, may be included.

The ECU 10 is an example of the controller according to an embodiment of the present invention. The ECU 10 is formed by or comprises a computer including a CPU, a memory that stores various programs, an input-output device, and/or others. The ECU 10 executes various calculations based on signals received from the one or more, particularly plurality of sensors, and sends control signals for appropriately operating an engine system, a brake system, and/or a steering system to the engine control system 31, the brake control system 32, and the steering control system 33, respectively.

The ECU 10 performs calculations to identify the position on a travel road based on travel road information. The travel road information is information relating to a travel road on which the vehicle 1 is traveling, and includes, for example, information relating to one or more of the following: the shape of the travel road (particularly straight, curved and/or the curvature of a curve), the width of the travel road, the number of lanes, the width of the lane, etc. The travel road information is acquired by one or more of the following: the camera 21, the radar 22, the navigation system 30, etc.

FIG. 2 shows a state where the vehicle 1 is traveling on a travel road 5. By performing calculations based on the travel road information, the ECU 10 sets a plurality of imaginary grid points Gₙ (n = 1, 2,...N) on the travel road 5 present in the traveling direction of the vehicle 1. When the extension direction of the travel road 5 is defined as an x-direction and the width direction of the travel road 5 is defined as a y-direction, the grid points Gₙ particularly are arranged in a lattice pattern along the x-direction and the y-direction.

The range in which the ECU 10 sets the grid points Gₙ spans a distance L on a front side of the vehicle 1 along the travel road 5. The distance L is calculated based on the speed of the vehicle 1 at the time of execution of calculation. In this embodiment, the distance L is a distance that the vehicle 1 is expected to travel in a specified (predetermined or predeterminable) fixed time t (e.g., three seconds) at the speed (V) at the time of execution of calculation (L = V × t). However, the distance L may instead be a specified (predetermined or predeterminable) fixed distance (e.g., about 100 m) and/or a function of the speed (and acceleration). A width W of the range in which the grid points Gₙ are set particularly is set to substantially the same value as the width of the travel road 5. Setting such a plurality of grid points Gₙ particularly allows identification of the position on the travel road 5.

Since the travel road 5 shown in FIG. 2 is a straight section, the grid points Gₙ are disposed substantially in a rectangular pattern. However, as the grid points Gₙ are disposed along the extension direction of a travel road, when the travel road includes a curved section, the grid points Gₙ are disposed substantially along the curve of the curved section.

The ECU 10 executes calculations for setting candidate paths RC (i.e., candidates that can be a target path for the vehicle 1 to actually travel along) based on the travel road information and obstacle information. The obstacle information is information relating to whether there is any obstacle (e.g., one or more of the following: a preceding vehicle, parked vehicle, pedestrian, dropped object, etc.) on the travel road 5 in the traveling direction of the vehicle 1, and/or to the type, size, moving direction, and/or moving speed, etc. of that obstacle. The obstacle information is acquired by the camera 21 and/or the radar 22.

The ECU 10 sets a plurality of candidate paths RC by path search particularly using the state lattice method. In the state lattice method, a plurality of candidate paths RC are set that extend, while branching off, from a start point Pₛ toward the grid points Gₙ present in the traveling direction of the vehicle 1. The start point Pₛ is the position of the vehicle 1 at the time of execution of calculation. In the example shown in FIG. 2, the vehicle 1 particularly is located at the origin of the xy-coordinate system, and therefore the coordinate of the start point Pₛ is (0, 0). The ECU 10 specifies a multidimensional function with the x-coordinate being a variable relative to the γ-coordinate, and sets, as the candidate paths RC, curves that are drawn in the xy-coordinate system based on the multidimensional function. This multidimensional function is, for example, a five-dimensional function or a three-dimensional function. FIG. 2 shows candidate paths RCₐ, RC_{b}, RC_{c} that are some of the plurality of candidate paths RC set by the ECU 10.

Further, the ECU 10 selects one candidate path RC with a minimum path evaluation parameter from among the plurality of candidate paths RC. Specifically, as shown in FIG. 2, the ECU 10 first particularly sets a plurality of sampling points SP along each candidate path RC.

The plurality of sampling points SP particularly are disposed at intervals on each candidate path RC. FIG. 2 shows, as an example, the sampling points SP that are set at regular intervals along the entire candidate paths RCₐ, RC_{b}, RC_{c}.

Next, the ECU 10 calculates a path evaluation parameter (also referred to as a path cost) at each sampling point SP. Further, for each candidate path RC, the ECU 10 adds up the path evaluation parameters at the respective sampling points SP set along the candidate path RC, and divides the total value by the overall length of the candidate path RC.

The ECU 10 particularly uses a value obtained by this division as the path evaluation parameter of that candidate path RC. The ECU 10 selects a candidate path RC with a minimum path evaluation parameter from among the plurality of candidate paths RC, and sets this candidate path RC as a target path.

Moreover, the ECU 10 sets an amount of control for speed control and/or steering control of the vehicle 1 at each sampling point SP. This amount of control is set based on the speed and/or steering required to cause the vehicle 1 to travel along the target path, and is used also to calculate the path evaluation parameter.

Based on this amount of control, the ECU 10 sends control signals to the engine control system 31, the brake control system 32, and/or the steering control system 33.

The camera 21 is an example of the travel road information acquiring device as well as the obstacle information acquiring device according to an embodiment of the present invention. The camera 21 takes one or more images of the surroundings of the vehicle 1 and outputs image data.

Based on the image data received from the camera 21, the ECU 10 identifies at least one object (e.g., one or more of the following: a preceding vehicle, parked vehicle, oncoming vehicle, pedestrian, travel road, more specifically a traveling lane on the road and/or an oncoming lane, division line (particularly lane line, white line, yellow line), traffic signal, traffic sign, stop line, intersection, etc.)

When the object is a vehicle, the ECU 10 particularly identifies the type of the vehicle (a large-size vehicle such as a truck, a passenger vehicle, etc.).

The ECU 10 may acquire information on an object from the outside by means of a transportation infrastructure, and/or inter-vehicle communication, etc. Thus, the type, relative position, and/or moving direction, etc. of the object particularly are or can be identified.

The radar 22 is an example of the travel road information acquiring device as well as the obstacle information acquiring device according to an embodiment of the present invention.

The radar 22 particularly measures the position and/or speed of an object (especially at least one of the following: a preceding vehicle, parked vehicle, pedestrian, dropped object on the travel road 5 (the traveling lane on the travel road 5 and/or the adjacent oncoming lane), traffic sign, etc.).

For example, a millimeter-wave radar can be used as the radar 22. The radar 22 transmits a radio wave in the traveling direction of the vehicle 1 and receives a reflected wave that is the transmitted wave reflected by an object.

Based on the transmitted wave and the received wave, the radar 22 measures or detects the distance between the vehicle 1 and the object (e.g., a vehicle-to-vehicle distance) and/or the speed of the object relative to the vehicle 1.

In this embodiment, a laser radar, an ultrasonic sensor, or the like may be used instead of the radar 22 to measure the distance to an object and the relative speed of the object. Specifically, a plurality of sensors may be used to form a position and/or speed measuring device.

The vehicle speed sensor 23 particularly detects the absolute speed of the vehicle 1.

The acceleration sensor 24 particularly detects acceleration of the vehicle 1 (longitudinal acceleration and deceleration in a front-rear direction and lateral acceleration and deceleration in a lateral direction).

The yaw rate sensor 25 particularly detects a yaw rate of the vehicle 1.

The steering angle sensor 26 particularly detects a rotation angle (steering angle) of the steering wheel of the vehicle 1.

The accelerator position sensor 27 particularly detects the amount of depression of the accelerator pedal.

The brake sensor 28 particularly detects the amount of depression of the brake pedal.

The positioning system 29 particularly is or comprises a GPS system and/or a gyro system, and particularly detects the position of the vehicle 1 (current vehicle position information).

The navigation system 30 particularly has map information stored inside, and/or can provide the map information to the ECU 10.

Based on the map information and the current vehicle position information, the ECU 10 particularly identifies one or more road characteristics such as a road (particularly a traveling lane and/or an oncoming lane thereof), intersection, traffic signal, building, etc. present around the vehicle 1 (especially in the traveling direction). The map information may instead be stored inside the ECU 10 and/or may be (at least partly) obtained or retrieved online.

The engine control system 31 particularly controls the engine of the vehicle 1. When it is necessary to accelerate or decelerate the vehicle 1, the ECU 10 sends a control signal to the engine control system 31 to change the engine output.

The brake control system 32 particularly controls the brake device of the vehicle 1. When it is necessary to decelerate the vehicle 1, the ECU 10 sends a control signal to the brake control system 32 to generate braking force.

The steering control system 33 controls the steering device of the vehicle 1. When it is necessary to change the traveling direction of the vehicle 1, the ECU 10 sends a control signal to the steering control system 33 to change the steering direction.

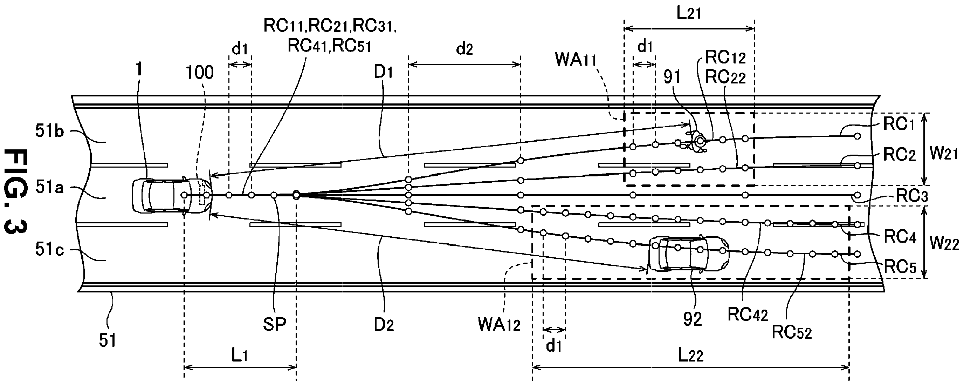

Next, calculations for setting the sampling points SP will be described with reference to FIG. 3. FIG. 3 is a view illustrating the candidate paths RC and the sampling points SP.

As described above, the ECU 10 sets a plurality of sampling points SP along each candidate path RC. While setting a larger number of the sampling points SP can increase the evaluation accuracy of the path evaluation parameter of each candidate path RC, a larger load of calculation is imposed on the system, which impairs its practicality or effectiveness.

Therefore, to achieve a balance between accurately evaluating a path evaluation parameter and reducing the load of calculation, the ECU 10 sets the sampling points SP based on at least one warning area WA. In the following, a method of setting the sampling points SP will be described.

FIG. 3 shows the candidate paths RC and the sampling points SP in the case where the vehicle 1 is traveling in a lane 51a of a travel road 51. A pedestrian 91 particularly is located in a lane 51b on the left of the lane 51a and another vehicle 92 is located in a lane 51c on the right of the lane 51a.

By the above-described path search particularly using the state lattice method, candidate paths RC₁ to RC₅ are set on the travel road 51.

The ECU 10 sets at least one warning area WA₁₁ on the travel road 5. The warning area WA₁₁ is an imaginary area including the pedestrian 91. Specifically, the warning area WA₁₁ has a rectangular shape with a length L₂₁ (e.g., about 15 m) in the x-direction (see FIG. 2) and a length W₂₁ (e.g., about 5 m) in the y-direction (see FIG. 2).

The ECU 10 particularly sets the lengths L₂₁, W₂₁ larger as a distance D₁ from the vehicle 1 to the pedestrian 91 is longer.

In the example shown in FIG. 3, the warning area WA₁₁ includes a part of each of the candidate paths RC₁, RC₂.

The ECU 10 particularly further sets at least one warning area WA₁₂ on the travel road 5. The warning area WA₁₂ is an imaginary area including the vehicle 92. Specifically, the warning area WA₁₂ has a rectangular shape with a length L₂₂ (e.g., about 30 m) in the x-direction (being particularly larger than the length L₂₁ in the x-direction of the warning area WA₁₁) and a length W₂₂ (e.g., about 10 m) in the y-direction (see FIG. 2), being particularly larger than the length W₂₁ in the y-direction of the warning area WA₁₁.

The ECU 10 particularly sets the lengths L₂₂, W₂₂ larger as a distance D₂ from the vehicle 1 to the vehicle 92 is longer.

In the example shown in FIG. 3, the warning area WA₁₂ includes a part of each of the candidate paths RC₄, RC₅.

The ECU 10 particularly sets the sampling points SP at intervals of d₁ along a part of each of the candidate paths RC₁, RC₂, RC₄, RC₅ that is in the vicinity of the vehicle 1. The interval d₁ is an example of the first interval according to an embodiment of the present invention.

Specifically, the ECU 10 sets the sampling points SP at intervals of d₁ along first parts RC₁₁, RC₂₁, RC₄₁, RC₅₁ of the candidate paths RC₁, RC₂, RC₄, RC₅.

The first parts RC₁₁, RC₂₁, RC₄₁, RC₅₁ particularly span a length L₁ (e.g., about 10 m) in the x-direction from the vehicle 1.

The ECU 10 particularly sets the length L₁ larger as the moving speed of the vehicle 1 is higher.

The ECU 10 particularly sets the sampling points SP at intervals of d₁ along a part of each of the candidate paths RC₁, RC₂ that is relatively close to the pedestrian 91.

Specifically, the ECU 10 sets the sampling points SP at intervals of d₁ along second parts RC₁₂, RC₂₂ of the candidate paths RC₁, RC₂ that are included in the warning area WA₁₁.

The ECU 10 particularly further sets the sampling points SP at intervals of d₁ along a part of each of the candidate paths RC₄, RC₅ that is relatively close to the vehicle 92.

Specifically, the ECU 10 sets the sampling points SP at intervals of d₁ along second parts RC₄₂, RC₅₂ of the candidate paths RC₄, RC₅ that are included in the warning area WA₁₂.

Moreover, the ECU 10 particularly sets the sampling points SP at intervals of d₂ along parts of the candidate paths RC₁, RC₂, RC₄, RC₅ other than the first parts RC₁₁, RC₂₁, RC₄₁, RC₅₁ and the second parts RC₁₂, RC₂₂, RC₄₂, RC₅₂. The interval d₂ is an example of the second interval according to an embodiment of the present invention.

The interval d₂ particularly is longer than the interval d₁ (e.g., d₁ = 0.2 m, d₂ = 2.0 m). Therefore, the sampling points SP particularly are set at a relatively high density along the first parts RC₁₁, RC₂₁, RC₄₁, RC₅₁ and the second parts RC₁₂, RC₂₂, RC₄₂, RC₅₂, while the sampling points SP particularly are set at a relatively low density along the other parts. In other words, the number of the sampling points SP per unit length in the first parts RC₁₁, RC₂₁, RC₄₁, RC₅₁ and the second parts RC₁₂, RC₂₂, RC₄₂, RC₅₂ is larger than that in the other parts.

In parts of the candidate paths RC₁, RC₂, RC₄, RC₅ that are located between the vehicle 1 and the warning areas WA₁₁, WA₁₂, the setting interval of the sampling points SP particularly becomes longer from d₁ to d₂ as the sampling points SP are set farther away from the vehicle 1 in the traveling direction of the vehicle 1.

On the other hand, for the candidate path RC₃ that is not included in either of the warning areas WA₁₁, WA₁₂, the ECU 10 particularly sets the sampling points SP at intervals of d₁ in a first part RC₃₁ that spans the length L₁ in the x-direction from the vehicle 1, and/or sets the sampling points SP at intervals of d₂ at the other part.

As can be understood from FIG. 3, the ECU 10 particularly sets the sampling points SP preferentially in the vicinity of the pedestrian 91 and/or the vehicle 92 and in the vicinity of the vehicle 1. In other words, the ECU 10 advantageously reduces the density of the sampling points SP in the part of the candidate path RC other than both of the part in the vicinity of the pedestrian 91 or the vehicle 92 and the part in the vicinity of the vehicle 1. This makes it possible to evaluate the path evaluation parameter (particularly the path cost) in the vicinity of the pedestrian 91 and/or the vehicle 92 and in the vicinity of the vehicle 1 with high accuracy, and at the same time reduce the load of calculating the path cost in the other parts.

Thus, a balance is achieved between reducing the load of calculation and accurately evaluating a path evaluation parameter.

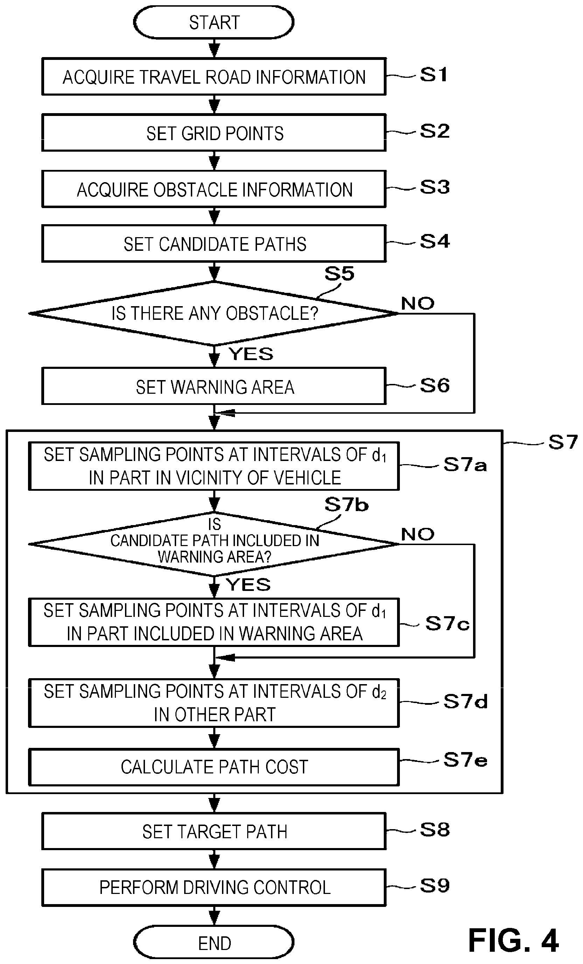

Next, calculations that the ECU 10 particularly executes when providing driving support control will be described with reference to FIG. 4. FIG. 4 is a flowchart showing the calculations executed by the ECU 10. The ECU 10 repeatedly executes the calculations shown in FIG. 4 (e.g., about once every 0.05 to 0.2 seconds).

First, in step S1, the ECU 10 acquires the travel road information from the camera 21, the radar 22, and the navigation system 30 (see FIG. 1).

Next, in step S2, the ECU 10 identifies the type and/or shape of the travel road (e.g., the extension direction of the travel road, the width of the travel road, etc.) based on the travel road information, and sets a plurality of grid points Gₙ (n = 1, 2,...N) on the travel road. For example, the ECU 10 sets grid points Gₙ at about 10 m intervals in the x-direction (see FIG. 2) and at about 0.875 m intervals in the y-direction (see FIG. 2).

Next, in step S3, the ECU 10 acquires the obstacle information from the camera 21 and/or the radar 22. Specifically, the ECU 10 acquires information relating to one or more of the following: whether there is any obstacle on the travel road in the traveling direction of the vehicle 1, the type of obstacle, the moving direction and/or moving speed of the obstacle, etc.

Next, in step S4, the ECU 10 sets a plurality of candidate paths RC on the travel road. Specifically, the ECU 10 specifies curved lines extending from the start point Pₛ (see FIG. 2) that is the position of the vehicle 1 at the time of execution of calculation, to the grid points Gₙ set in step S2, and sets these curved lines as the candidate paths RC.

Next, in step S5, the ECU 10 determines whether there is any obstacle in the traveling direction of the vehicle 1 based on the obstacle information. When it is determined that there is an obstacle in the traveling direction of the vehicle 1 (S5: YES), the ECU 10 moves to step S6.

Next, in step S6, the ECU 10 sets a warning area WA on the travel road 5. As described above, when the obstacle is a pedestrian, the ECU 10 sets the warning area WA including the pedestrian. When the obstacle is a vehicle, the ECU 10 sets the warning area WA including the vehicle. The ECU 10 particularly makes the outer shape of the warning area WA larger as the distance from the vehicle 1 to the obstacle is longer.

When the obstacle is a vehicle, the ECU 10 may make the outer shape of the warning area WA larger according to the type of the vehicle.

For example, the ECU 10 may make the outer shape of the warning area WA larger when the obstacle is a large-size vehicle, such as a freight vehicle or a bus, than when the obstacle is a passenger vehicle.

After setting the warning area WA in step S6, the ECU 10 moves to step S7.

On the other hand, when it is determined in step S5 that there is no obstacle in the traveling direction of the vehicle 1 (S5: NO), the ECU 10 moves to step S7 without going through step S6. Thus, the ECU 10 moves to step S7 without setting the warning area WA.

Step S7 includes setting of the sampling points SP (steps S7a to S7d) and calculation of the path evaluation parameter (step S7e).

In step S7a, the ECU 10 particularly sets the sampling points SP at intervals of d₁ along a part of the candidate path RC that is in the vicinity of the vehicle 1.

Here, the sampling points SP particularly are set along a part of the candidate path RC that spans the length L₁ in the x-direction (see FIG. 2) from the vehicle 1 (see FIG. 3).

Next, in step S7b, the ECU 10 determines whether or not the candidate path RC is included in the warning area WA. When it is determined that the candidate path RC is included in the warning area WA (S7b: YES), the ECU 10 moves to step S7c.

Next, in step S7c, the ECU 10 particularly sets the sampling points SP at intervals of d₁ along a part of the candidate path RC that is included in the warning area WA.

Next, in step S7d, the ECU 10 particularly sets the sampling points SP at intervals of d₂ along the other part of the candidate path RC (i.e., the part other than both of the part included in the warning area WA and the part in the vicinity of the vehicle 1).

On the other hand, when it is determined in step S7b that the candidate path RC is not included in the warning area WA (S7b: NO), the ECU 10 moves to step S7d without going through step S7c.

Also, when the ECU 10 has determined in step S5 that there is no obstacle in the traveling direction of the vehicle 1 (S5: NO) and therefore has not set the warning area WA, the ECU 10 particularly determines that the candidate path RC is not included in the warning area WA (S7b: NO), and moves to step S7d without going through step S7c.

When the candidate path RC is not included in the warning area WA (S7b: NO), in step S7d, the ECU 10 particularly sets the sampling points SP at intervals of d₂ along the other part of the candidate path RC (i.e., the part other than the part in the vicinity of the vehicle 1).

The range in which the sampling points SP are set at intervals of d₂ in this case particularly is larger than that when the candidate path RC is included in the warning area WA (S7b: YES). In other words, the number of the set sampling points SP is smaller when the candidate path RC is not included in the warning area WA than when the candidate path RC is included in the warning area WA.

Next, in step S7e, the ECU 10 calculates a path evaluation parameter at each sampling point SP in the candidate path RC. The path evaluation parameter includes a evaluation parameter relating to at least one of the following: the speed, acceleration, lateral acceleration, a rate of change of the path, obstacle, etc. These evaluation parameters can be set as appropriate.

As a general idea, a path evaluation parameter particularly includes a movement evaluation parameter and a safety evaluation parameter. For example, when the vehicle travels along a straight path, the moving distance is shorter and therefore the movement evaluation parameter is lower, whereas when the vehicle travels along a path that circumvents an obstacle etc., the moving distance is longer and therefore the movement evaluation parameter is higher.

The movement evaluation parameter particularly increases as the lateral acceleration increases.

As described above, the ECU 10 stores a value obtained by division in the memory (not shown) as the path evaluation parameter of the candidate path RC.

The ECU 10 executes these calculations in step S7 for each of the plurality of candidate paths RC set in step S4.

Next, in step S8, the ECU 10 particularly sets a target path. Specifically, the ECU 10 selects a candidate path RC with a minimum path evaluation parameter, and sets this candidate path RC as a target path.

Next, in step S9, the ECU 10 particularly sends one or more control signals to the engine control system 31, the brake control system 32, and/or the steering control system 33 particularly such that the vehicle 1 travels along the target path.

These control signals are generated based on the amount of control for speed control and/or steering control of the vehicle 1 that particularly is set at each sampling point SP in the target path.

In the following, effects of the vehicle driving support system 100 of this embodiment will be described.

In the above-described configuration, the ECU 10 that is or is part of the controller sets, in the vicinity of an obstacle, the warning area WA with an outer shape according to the obstacle.

Further, the ECU 10 particularly sets the sampling points SP at intervals of d₁ along a part of the candidate path RC that is included in the warning area WA.

Since the interval d₁ particularly is shorter than the interval d₂, a plurality of sampling points SP are thus set at a relatively high density in the vicinity of the obstacle. As a result, the path evaluation parameter in the range according to the obstacle can be evaluated with high accuracy.

The dimension of the warning area WA in the front-rear direction may be made larger, for example, when, based on image data received from the camera 21, the obstacle is a vehicle and this vehicle is assumed to be a truck from the height and width of the vehicle, than when the vehicle is a passenger vehicle.

A table or look-up table showing types of vehicle and corresponding sizes of the warning area may be stored in the ECU 10 in advance, and the ECU 10 may set the dimension of the warning area WA according to the type of vehicle by referring to this table or look-up table.

On the other hand, for the other part of the candidate path RC (i.e., the part not included in the warning area WA), the ECU 10 particularly sets the sampling points SP at intervals of d₂ along this other part.

Since the interval d₂ particularly is longer than the interval d₁, a plurality of sampling points SP are thus set at a relatively low density in the other part. As a result, the load of calculating the path evaluation parameter in the other part can be reduced. While the relatively low density of the sampling points SP reduces the evaluation accuracy of the path evaluation parameter in the other part, this evaluation accuracy has a relatively minor impact on traveling of the vehicle 1 through the warning area WA.

Thus, the above configuration makes it possible to evaluate a path evaluation parameter with accuracy sufficient for practical use while reducing the load of calculation.

As a result, a balance is achieved between accurately evaluating the path evaluation parameter of the candidate path RC and reducing the load of calculating the path evaluation parameter.

The ECU 10 particularly is configured to make the outer shape of the warning area WA larger as the distance from the vehicle 1 to the obstacle is longer.

Generally, the accuracy of determining an obstacle decreases as the distance from the vehicle 1 equipped with the vehicle driving support system 100 to the obstacle increases.

In the above configuration, the outer shape of the warning area WA particularly is made larger as the distance from the vehicle 1 to the obstacle is longer, which makes it possible to set the warning area WA with an outer shape according to the accuracy of determining an obstacle.

As a result, it is possible to evaluate a path evaluation parameter with accuracy sufficient for practical use while reducing the load of calculation.

The ECU 10 is further configured to make the outer shape of the warning area WA larger when the obstacle is a vehicle than when the obstacle is a pedestrian.

In this configuration, a path evaluation parameter can be evaluated with high accuracy in a larger range when the obstacle is a vehicle than when the obstacle is a pedestrian. In other words, a path evaluation parameter relative to a vehicle that is an obstacle with a relatively high moving speed can be evaluated with higher accuracy.

As a result, it is possible to evaluate a path evaluation parameter with accuracy sufficient for practical use while reducing the load of calculation.

Alternatively, a plurality of sampling points SP may be set such that the density of the sampling points SP inside the warning area WA particularly becomes gradually higher from an end to a central part of the warning area WA. This makes it possible to reduce the load of calculation while increasing the evaluation accuracy of the path evaluation parameter at the central part of the warning area WA at which the obstacle is highly likely to be present.

### First Modification

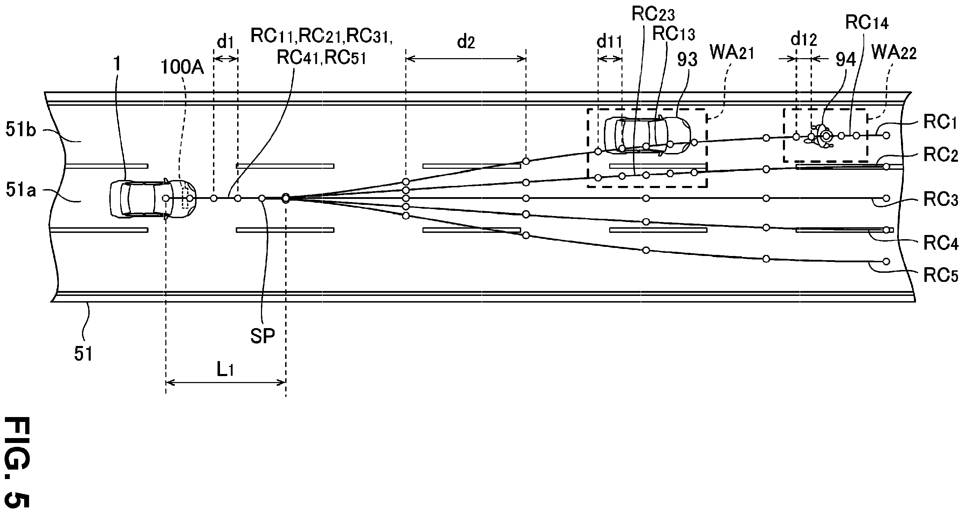

Next, a vehicle driving support system 100A according to a first modification will be described with reference to FIG. 5. FIG. 5 is a view illustrating candidate paths RC and sampling points SP according to the first modification.

Like the vehicle driving support system 100 of the embodiment, the vehicle driving support system 100A is installed or installable in the vehicle 1 and/or provides driving support control under which the vehicle 1 travels along a target path.

The vehicle driving support system 100A differs from the system of the embodiment in the method of setting the sampling points SP etc. Description of features that the vehicle driving support system 100A has in common with or are similar thereto the system of the embodiment will be omitted as appropriate.

FIG. 5 shows the candidate paths RC and the sampling points SP in the case where the vehicle 1 is traveling in the lane 51a of the travel road 51. Another vehicle 93 and a pedestrian 94 are located in the lane 51b on the left of the lane 51a.

The controller of the vehicle driving support system 100A sets one or more warning areas WA₂₁, WA₂₂ on the travel road 51.

The warning area WA₂₁ particularly includes the vehicle 93, and the warning area WA₂₂ includes the pedestrian 94.

In the example shown in FIG. 5, the warning area WA₂₁ includes a part of each of candidate paths RC₁, RC₂, and the warning area WA₂₂ includes a part of the candidate path RC₁.

The controller particularly sets the sampling points SP at intervals of d₁ along a part of each of the candidate paths RC₁, RC₂ that is in the vicinity of the vehicle 1. Specifically, the controller sets the sampling points SP at intervals of d₁ along first parts RC₁₁, RC₂₁ of the candidate paths RC₁, RC₂.

The controller particularly sets the sampling points SP at intervals of d₁₁ along third parts RC₁₃, RC₂₃ of the candidate paths RC₁, RC₂ that are included in the warning area WA₂₁. The interval d₁₁ is an example of the first interval according to an embodiment of the present invention. In the first modification, the interval d₁₁ particularly is set to the same value as the distance d₁ (e.g., d₁ = d₁₁ = 0.2 m) .

The controller further particularly sets the sampling points SP at intervals of d₁₂ along a fourth part RC₁₄ of the candidate path RC₁ that is included in the warning area WA₂₂. The interval d₁₂ is an example of the first interval according to an embodiment of the present invention.

The interval d₁₂ particularly is shorter than the interval d₁₁ (e.g., d₁₂ = 0.1 m). Therefore, the density of the sampling points SP set along the fourth part RC₁₄ is higher than the density of the sampling points SP set along the third parts RC₁₃, RC₂₃. In other words, the number of the sampling points SP per unit length in the fourth part RC₁₄ is larger than that in the third parts RC₁₃, RC₂₃.

On the other hand, for candidate paths RC₃ to RC₅ that are not included in either of the warning areas WA₂₁, WA₂₂, the controller sets the sampling points SP at intervals of d₁ in first parts RC₃₁, RC₄₁, RC₅₁ that particularly span the length L₁ in the x-direction from the vehicle 1, and sets the sampling points SP at intervals of d₂ in the other parts.

Thus, the controller of the vehicle driving support system 100A according to the first modification is configured to set the first interval shorter when the obstacle is a pedestrian than when the obstacle is a vehicle.

This configuration particularly makes it possible to set a plurality of sampling points SP at a higher density in the warning area WA when the obstacle is a pedestrian than when the obstacle is a vehicle.

Thus, a path evaluation parameter relative to a pedestrian that is an obstacle with a relatively small outer shape can be evaluated with higher accuracy. As a result, it is possible to evaluate a path evaluation parameter with accuracy sufficient for practical use while reducing the load of calculation.

### Second Modification

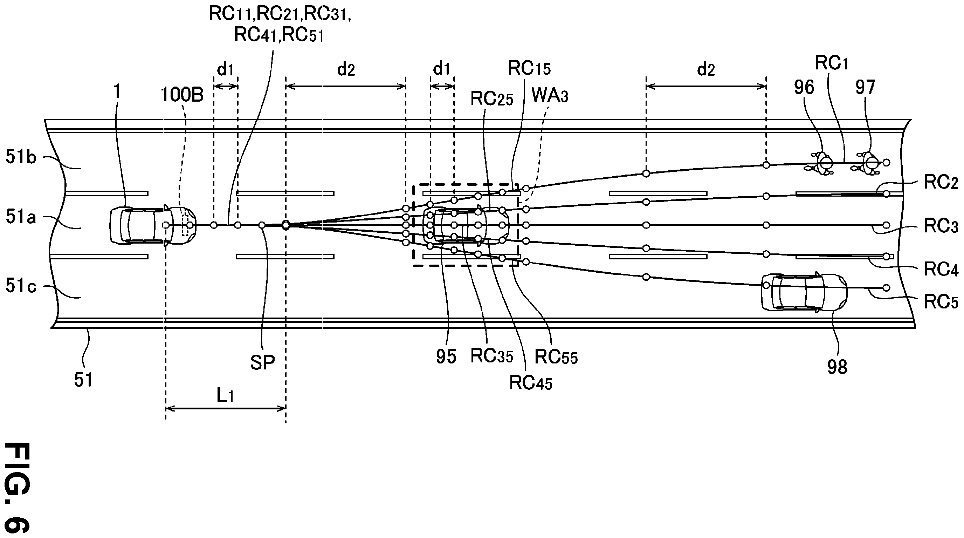

Next, a vehicle driving support system 100B according to a second modification will be described with reference to FIG. 6. FIG. 6 is a view illustrating candidate paths RC and sampling points SP according to the second modification.

Like the vehicle driving support system 100 of the embodiment, the vehicle driving support system 100B is installed in the vehicle 1 and provides driving support control under which the vehicle 1 travels along a target path.

The vehicle driving support system 100B particularly differs from the system of the embodiment in the method of setting the sampling points SP etc. Description of features that the vehicle driving support system 100B has in common with or is substantially similar to the system of the embodiment will be omitted as appropriate.

FIG. 6 shows the candidate paths RC and the sampling points SP in the case where the vehicle 1 is traveling in the lane 51a of the travel road 51.

Another vehicle 95 is located in the lane 51a. One or more pedestrians 96, 97 are located in the lane 51b particularly on the left of the lane 51a and another vehicle 98 is located in the lane 51c particularly on the right of the lane 51a.

The controller of the vehicle driving support system 100B sets a warning area WA₃ on the travel road 51. The warning area WA₃ includes the vehicle 95 that is an example of an obstacle closest to the vehicle 1. In the example shown in FIG. 6, the warning area WA₃ includes a part of each of candidate paths RC₁ to RC₅.

The controller particularly sets the sampling points SP at intervals of d₁ along a part of each of the candidate paths RC₁ to RC₅ that is in the vicinity of the vehicle 1.

Specifically, the controller sets the sampling points SP at intervals of d₁ along first parts RC₁₁, RC₂₁, RC₃₁, RC₄₁, RC₅₁ of the candidate paths RC₁ to RC₅.

On the other hand, the controller does not set the warning area WA in the vicinity of the pedestrians 96, 97 and the vehicle 98 that are examples of obstacles present farther away from the vehicle 1 than the vehicle 95 is.

Thus, the controller of the vehicle driving support system 100B according to the second modification is configured to, when there are a plurality of obstacles on the travel road, set the warning area WA in the vicinity of an obstacle that is closest to the vehicle 1 and set no warning area WA in the vicinity of the other obstacles.

In this configuration, a plurality of sampling points SP are set at a relatively high density in the vicinity of an obstacle that is closest to the vehicle 1. Thus, a path evaluation parameter relative to an obstacle that requires most attention for safety can be evaluated with higher accuracy. As a result, it is possible to evaluate a path evaluation parameter with accuracy sufficient for practical use while reducing the load of calculation.

The embodiment of the present invention has been described above with reference to specific examples. However, the present invention is not limited to these specific examples. This means that the present invention implemented by a person skilled in the art by making design changes as appropriate to these specific examples is also included in the scope of the present invention, as long as the features of the invention are retained.

### Reference Signs List

1 Vehicle
10 ECU (controller)
21 Camera (travel road information acquiring device, obstacle information acquiring device)
22 Radar (travel road information acquiring device, obstacle information acquiring device)
30 Navigation system (travel road information acquiring device)
100 Vehicle driving support system
RC Candidate path
SP Sampling point

## Claims

1. A vehicle driving support system (100; 100A; 100B) to be installed in a vehicle (1), the system comprising:
a travel road information acquiring device (21; 22) that can acquire travel road information relating to a travel road (5; 51);
an obstacle information acquiring device (21; 22) that can acquire obstacle information relating to an obstacle (91-98) on the travel road (5; 51); and
a controller (10) that is configured to set a target path on the travel road (5; 51) based on the travel road information and to control the vehicle (1) so as to travel substantially along the target path, wherein
the controller (10) is configured to:
set a plurality of candidate paths (RC) on the travel road (5; 51) based on the travel road information;
set a plurality of sampling points (SP) at specified intervals along each of the plurality of candidate paths (RC);
calculate a path evaluation parameter at each of the plurality of sampling points (SP); and
select one of the plurality of candidate paths (RC) as the target path based on the path evaluation parameter, and
the controller (10) is further configured to:
set, in the vicinity of or corresponding to the obstacle (91-98), at least one warning area (WA) with an outer shape according or corresponding to the obstacle (91-98); and
set the sampling points (SP) at first intervals (d₁; d₁₁; d₁₂) along a part of the candidate path (RC) that is included in the warning area (WA), and set the sampling points at second intervals (d₂), longer than the first intervals (d₁; d₁₁; d₁₂, along the other part of the candidate path (RC).

2. The vehicle driving support system according to claim 1, wherein the controller (10) is configured to make the outer shape of the warning area (WA) larger as a distance from the vehicle (1) to the obstacle is longer.

3. The vehicle driving support system according to any one of the preceding claims, wherein the controller (10) is configured to make the outer shape of the warning area (WA) larger when the obstacle is a vehicle (92; 93; 95; 98) than when the obstacle is a pedestrian (91; 94; 96; 97) .

4. The vehicle driving support system according to any one of the preceding claims, wherein the controller (10) is configured to set the first interval (d₁; d₁₁; d₁₂) shorter when the obstacle is a pedestrian (91; 94; 96; 97) than when the obstacle is a vehicle (92; 93; 95; 98).

5. The vehicle driving support system according to any one of the preceding claims, wherein the controller (10) is configured to, when there are a plurality of obstacles (95-98) on the travel road (5; 51), set the warning area (WA₃) in the vicinity of an obstacle (95) that is closest to the vehicle (1) and set no warning area in the vicinity of the other obstacles (96-98).

6. A vehicle (1) comprising a vehicle driving support system (100) according to any one of the preceding claims.

7. A computer-implemented vehicle driving support method comprising:
acquiring travel road information relating to a travel road (5; 51);
acquiring obstacle information relating to an obstacle (91-98) on the travel road (5; 51); and
setting a target path on the travel road (5; 51) based on the travel road information and to control the vehicle (1) so as to travel substantially along the target path, wherein
wherein the vehicle driving support method further comprises:
setting a plurality of candidate paths (RC) on the travel road (5; 51) based on the travel road information;
setting a plurality of sampling points (SP) at specified intervals along each of the plurality of candidate paths (RC);
calculating a path evaluation parameter at each of the plurality of sampling points (SP); and
selecting one of the plurality of candidate paths (RC) as the target path based on the path evaluation parameter,
wherein, in the vicinity of or corresponding to the obstacle (91-98), at least one warning area (WA) is set with an outer shape according or corresponding to the obstacle (91-98); and
wherein the sampling points (SP) are set at first intervals (d₁; d₁₁; d₁₂) along a part of the candidate path (RC) that is included in the warning area (WA), and the sampling points are set at second intervals (d₂), longer than the first intervals (d₁; d₁₁; d₁₂), along the other part of the candidate path (RC).

8. The computer-implemented vehicle driving support method according to claim 7, wherein the outer shape of the warning area (WA) is made larger as a distance from the vehicle (1) to the obstacle is longer.

9. The computer-implemented vehicle driving support method according to claim 7 or 8, wherein the outer shape of the warning area (WA) is made larger when the obstacle is a vehicle (92; 93; 95; 98) than when the obstacle is a pedestrian (91; 94; 96; 97).

10. The computer-implemented vehicle driving support method according to any one of the preceding claims 7 to 9, wherein the first interval (d₁; d₁₁; d₁₂) is set shorter when the obstacle is a pedestrian (91; 94; 96; 97) than when the obstacle is a vehicle (92; 93; 95; 98).

11. The computer-implemented vehicle driving support method according to any one of the preceding claims 7 to 10, wherein, when there are a plurality of obstacles (95-98) on the travel road (5; 51), the warning area (WA₃) is set in the vicinity of an obstacle (95) that is closest to the vehicle (1) while no warning area is set in the vicinity of the other obstacles (96-98).

12. A computer program product comprising computer readable instructions which, when loaded and executed on a suitably system (100; 100A; 100B), perform the steps of a vehicle driving support method according to any one of the preceding claims 7 to 11.
